# EUROPEAN PATENT SPECIFICATION

(11) **EP 2 011 689 B1**
(45) Date of publication and mention of the grant of the patent: **22.11.2017**
(21) Application number: 07741571.9
(22) Date of filing: 13.04.2007
(51) Int. Cl.: B60Q 1/44, B60Q 11/00, B60Q 1/46

(54) **STOP LAMP OPERATION CONTROLLER**
BREMSLEUCHTENBETRIEBSTEUERUNG
DISPOSITIF DE COMMANDE DE FONCTIONNEMENT DE FEU DE FREIN

(30) Priority: 25.04.2006 JP 2006120309
(43) Date of publication of application: 07.01.2009
(73) Proprietor: OMRON Automotive Electronics Co., Ltd., Komaki, Aichi 485-0802 (JP); Mitsubishi Jidosha Kogyo Kabushiki Kaisha, Tokyo 108-8410 (JP)
(72) Inventor: IKUSHIMA, Yoshihiro c/o OMRON Corporation, Kyoto-shi, Kyoto 600-8530 (JP); YAMAGAMI, Masahiro c/o OMRON Corporation, Kyoto-shi, Kyoto 600-8530 (JP); SHIMPO, Toshiya c/o MITSUBISHI JIDOSHA KOGYO K.K., Tokyo 108-8410 (JP); SHINOHARA, Satoshi c/oMITSUBISHI JIDOSHA KOGYO KK, Tokyo 108-8410 (JP)
(74) Representative: Kilian Kilian & Partner
(86) International application number: PCT/JP2007/058135
(87) International publication number: WO 2007/125760

(56) References cited:
- WO-A1-2004/082996
- JP-A- 04 005 158
- JP-A- 09 123 829
- JP-A- 10 236 226
- JP-B2- 57 004 541
- JP-U- 02 100 850
- US-A- 5 909 173

## Description

### Technical Field

The present invention relates to a stop lamp operation controller for a vehicle, such as an automobile. In particular, the present invention relates to a stop lamp operation controller which is capable of "automatic flashing control" of a stop lamp.

### Background Art

According to "Road Vehicle Safety Standards" (Japan Minister of Transport Ordinance No. 67, July 28, 1951), a display device (red-colored lamplight) is required to be mounted on the rear surface of a motor vehicle, such as an automobile, etc. for indicating the operating state of the vehicle brake mechanism to a following vehicle, etc.. Specifically, one brake lamp is required to be mounted on the rear surface of a two-wheeled vehicle or a motorized bicycle, and two brake lamps are required to be mounted one on either side of the rear surface of an automobile such as a passenger car. Additionally, an auxiliary brake lamp is required to be mounted at a predetermined height position in the center of a rear surface of an automobile such as a passenger car. Typically, a brake lamp is referred to as a brake lamp or a stop lamp, and an auxiliary brake lamp is referred to as a high mounted stop lamp. However, in this specification, a brake lamp and the auxiliary brake lamp are not differentiated and are generically referred to as "stop lamp".

A stop lamp is usually turned OFF and turned ON in red when a braking operation is performed by the driver. However, this two-valued operation (OFF and ON) has a disadvantage in that this provides a small amount of information to a following vehicle, etc. A braking operation includes not only gradual braking for deceleration (hereinafter referred to as gradual braking), but also rapid braking for hazard avoidance (hereinafter referred to as rapid braking). Realistically, a mechanism indicating three types of conditions having a combination of these two braking modes and a normal condition (non-braking condition) is preferred.

Also, there is an operation of intermittently stepping on the brake pedal in one braking operation which is experientially performed. When this operation is performed, since the stop lamp repeatedly turns ON and OFF seemingly to be flashing, this will evoke a strong warning to a following vehicle. Therefore, theoretically, if this operation is used together, the above-mentioned three types of condition indicators can be realized.

Incidentally, the above-stated operation (intermittently stepping on the brake pedal) can be considered equivalent to what is called pump-braking on slippery road surfaces, such as a wet road, frozen road, etc. However, instantly pumping the brakes in an emergency situation requires considerable practice and experience, which cannot be accomplished easily by everybody. In addition, most of today' s vehicles are equipped with a device for preventing wheel lock during braking (for example, Anti-lock Braking System (ABS)). Additionally, since most of today's vehicles are equipped with a device for preventing wheel lock during braking (for example, Anti-lock Braking System (ABS)), the opportunity itself to perform pump braking is decreasing. To begin with, since it has been pointed out that the compatibility of ABS and pump braking is mediocre (braking distance increases), it is impossible to perform discriminable indications of the three conditions for a "normal condition (non-braking condition)", a "gradual braking condition" and a "rapid braking condition" coupled with the above-mentioned operation (intermittently stepping on the brake pedal) with a stop lamp.

Consequently, automated technology to replace the above-described operation (intermittently stepping on the brake pedal) is needed. Namely, a technology which is capable of automatically flashing a stop lamp without intermittently stepping on the brake pedal unnaturally. The current Japanese laws for "Road Transportation Vehicle Safety Standards (Section 39) " specifies in part that "a brake lamp may not be a mechanism which automatically flashes". Although the present invention intends automatic flashing of a brake lamp (stop lamp), this does not promote a violation of law and ordinances. Recently, there has been a motion to relax this regulation (ECE Reg. 48 revision proposal). According to this motion, this will be a precedent disclosure of a socially beneficial technology.

As a conventional prior art related to automatic flashing of a brake lamp (stop lamp), for example, a "STOP LAMP FLASHING DEVICE" is known from the disclosure of Japanese Laid-Open (Kokai) Patent Publication No. 2000-052857.

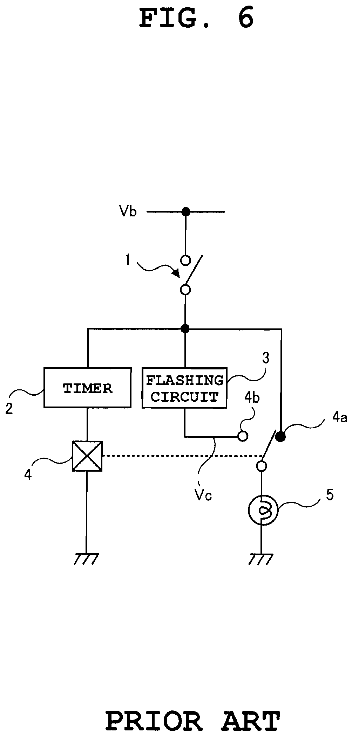

FIG. 6 is a schematic configuration diagram of the conventional prior art. However, this conventional prior art drawing has been re-annotated in part be more clearly understood. In this drawing, a brake switch 1 switches ON (turns ON) when a braking operation is performed by the driver. For example, the brake switch 1 is equivalent to a switch, etc. attached to the brake pedal. When the brake switch 1 is turned ON, a battery voltage Vb is supplied to a timer 2 and a flashing circuit 3 via the brake switch 1.

A relay 4 is connected to the timer 2. The timer 2 excites the relay 4 for a predetermined period of time immediately after the battery voltage Vb is supplied. The relay 4 has a normally closed terminal 4a (hereinafter also referred to as a normally closed contact or simply contact) and a normally open terminal 4b (hereinafter also referred as a normally open contact or simply contact) . When the relay 4 is in a non-excited state and the brake switch 1 is turned ON, the battery voltage Vb is supplied to a stop lamp 5 via a normally closed terminal 4a. When the relay 4 is in an excited state and the brake switch 1 is turned ON, the relay 4 supplies a driver voltage Vc from a flashing circuit 3 to the stop lamp 5 via a normally open terminal 4b.

While the battery voltage Vb is being supplied via the brake switch 1, the flashing circuit 3 generates the driver voltage Vc that repeatedly turns ON and OFF in a predetermined period.

Therefore, based on this configuration, since the driver voltage Vc from the flashing circuit 3 is supplied to the stop lamp 5 via the normally open terminal 4b of the relay 4 for a predetermined interval immediately after a braking operation is performed by the driver. During this period, the stop lamp 5 repeatedly turns ON and OFF according to the ON and OFF period of the driver voltage Vc and the stop lamp 5 automatically flashes. Then, after a predetermined interval elapses, the battery voltage Vb is supplied to the stop lamp 5 via the normally closed terminal 4 since the relay 4 becomes non-excited (if the brake switch 1 is still turned ON) and the stop lamp 5 can be made into a steady ON state.

Moreover, the prior document US 5,909,173 A discloses a vehicle warning device according to the preamble of claims 1 and 3. This vehicle warning device comprises a visual indicator activated by a deceleration sensor upon emergency deceleration of the vehicle. The visual indicator is powered by a base inserted into a vehicle lamp socket. The base is part of an adapter comprising an adapter socket for receiving the vehicle lamp. The adapter allows installation of the warning device by simply plugging the adapter into the vehicle lamp socket without wiring or mounting changes to the vehicle.

### Disclosure of Invention

The conventional prior art has the following problems:

### (1) Lack of consideration for surroundings

As described above, a braking operation can be divided into two operations, such as braking for simply deceleration (gradual braking) and braking for immediate avoidance (rapid braking). Braking that should flash the stop lamp 5 is rapid braking, but is unnecessary for gradual braking. This is because, for example, in a case where a braking operation is frequently performed while in a line of traffic congestion, the repeated flashing of the stop lamp being observed by the occupants in a following vehicle makes them feel annoyed and irritated. Thus, since the conventional prior art flashes the stop lamp 5 every braking time and does not differentiate between gradual braking and rapid braking, unnecessary flashing cannot be denied and causes a problem in that there is a lack of consideration of the surroundings (especially, a following vehicle).

### (2) Durability of a relay

Generally, durability (life span) of a relay is discussed by a maximum opening and closing number (or number times). When a relay maximum opening and closing number x times reaches opening and closing y times day by day, it is said that the life span will be exhausted on x/y day, etc. When you look at the conventional prior art based on this, the relay 4 opens and closes whenever a braking operation is performed. If, for example, the maximum opening and closing number of the relay 4 is 1 million times and the number of braking operations performed per day is 1,000 times for descriptive purposes, the relay 4 life span will be exhausted as calculated by 1 million times divided by 1,000 times = 1,000 days, that is to say, about 2.7 years. Although 1,000 braking operations per day may seem excessive, this number of times is possible when traffic congestion lasts for a long time. It must be said that a life span of 2.7 years is especially short for a relay used in a vehicle. Therefore, the conventional prior art has a problem in that relay durability is insufficient.

Consequently, an object of the present invention is to provide a stop lamp operation controller which improves durability of a relay, while preventing unnecessary automatic flashing. This object is achieved by the stop lamp operation controller according to claims 1 and 3. Further advantageous embodiments of the invention are the subject-matter of the dependent claims. Aspects of the invention are set out below.

In accordance with one aspect of the present invention, there is provided a stop lamp operation controller for supplying a battery voltage to a stop lamp via a brake detection switching element which is turned ON during a braking operation of a vehicle. The stop lamp operation controller is characterized by: a primary line and a secondary line aligned in parallel between the brake detection switching element and the stop lamp; a first relay for placing the secondary line in a non-conductive state during an excited state and alternatively placing the secondary line in a conductive state during a non-exited state; a second relay for placing the primary line in the non-conductive state during the excited state and alternatively placing the primary line in the conductive state during the non-excited state; a rapid braking condition judgment means for judging a rapid braking condition; and a control means for placing the first relay in the excited state and periodically placing the second relay in the non-excited state and the excited state, when a rapid braking condition is judged by the rapid braking condition judgment means, and alternatively for placing both the first relay and the second relay in the non-excited state, when a rapid braking condition is not judged by the rapid braking condition means.

In the preferred aspect of the invention, the stop lamp operation controller is further characterized by: an abnormality judgment means for judging abnormality of the primary line or the secondary line; and an information means for reporting an abnormality, when an abnormality of the primary line or secondary line is judged by the abnormality judgment means.

In accordance with another aspect of the present invention, there is provided a stop lamp operation controller for supplying a battery voltage to a stop lamp via a brake detection switching element which is turned ON during a braking operation of a vehicle, the stop lamp operation controller is characterized by: a primary line and a secondary line aligned in parallel between the brake detection switching element and the stop lamp; a relay for placing the secondary line in a non-conductive state during an excited state and alternatively placing the secondary line in a conductive state during a non-exited state; a switching circuit for placing the primary line in the non-conductive state during an OFF state and alternatively placing the primary line in the conductive state during an ON state; a rapid braking condition judgment means for judging a rapid braking condition; and a control means for placing the relay in the excited state and periodically placing the switching circuit in the OFF state and the ON state, when a rapid braking condition is judged by the rapid braking condition judgment means, and alternatively for placing the relay in the non-excited state and the switching circuit in the ON state, when a rapid braking condition is not judged by the rapid braking condition means.

In the preferred embodiment of the invention, the stop lamp operation controller is further characterized by: an abnormality judgment means for judging abnormality of the primary line or the secondary line; and an information means for reporting an abnormality, when an abnormality of the primary line or secondary line is judged by the abnormality judgment means.

According to the present invention, during braking (gradual braking) other than rapid braking, since the first relay and the second relay are both in a non-exited state, durability of the relays performing this gradual braking are not affected. On the other hand, during rapid braking, the first relay remains in an excited state and the second relay repeats excitation/non-excitation (opening and closing) in a predetermined period. Although only the frequency of these openings and closings affects the durability of the relay, since the frequency of occurrence for rapid braking is extremely infrequent the severity is significantly less as compared with conventional prior art.

Additionally, when using a switching circuit in place of a second relay, durability can be still further improved. Also, noise is controlled and there is not adverse effect on other electrical components. Further, improvement in the life span of the stop lamp can be acquired.

Moreover, according to the present invention, flashing of the stop lamp is activated only in an emergency (during rapid braking). In other words, since the stop lamp is made to only turn ON during gradual braking other than during rapid braking, there is no annoyance to a following vehicle.

Finally, when a fault occurs in the primary line or the secondary line, the failure is reported instantly. Thus, immediate corrective action can be taken, such as taking the vehicle to a repair shop, etc., and a traffic safety problem will not be caused.

### Brief Description of Drawings

FIG. 1 is a configuration diagram of a stop lamp operation controller according to an embodiment of the present invention;
FIG. 2A is a formed state diagram of a primary line 31 and a secondary line 32;
FIG. 2B is a formed state diagram of the primary line 31 and the secondary line 32;
FIG. 3 is a diagram showing an operation flowchart of the stop lamp operation controller according to an embodiment of the present invention;
FIG. 4 is a subroutine flowchart of the failure judgment processing (Step S5);
FIG. 5 is a configuration diagram of a semiconductor switching circuit 33 which can be used in place of a second relay 22; and
FIG. 6 is a schematic configuration diagram of a conventional prior art.

### Best Mode for Carrying Out the Invention

The present invention will hereinafter be described in detail with reference to the preferred embodiments shown in the accompanying drawings. Specification of various details, and exemplification of examples, numeric values, character strings, and other symbols are merely used as reference to clarify the spirit of the present invention, and it is obvious that the spirit of the preset invention is not limited by these or parts thereof. Detailed explanations are omitted for known methods, known procedures, known architecture, known circuit configurations, etc. (referred to, hereinafter, as "known items") to simplify explanations. However, these known items or parts thereof are not intentionally excluded. The known items can be easily known by a person skilled in the art at the time the present invention is filed. Therefore, the known items are naturally included in the explanations below.

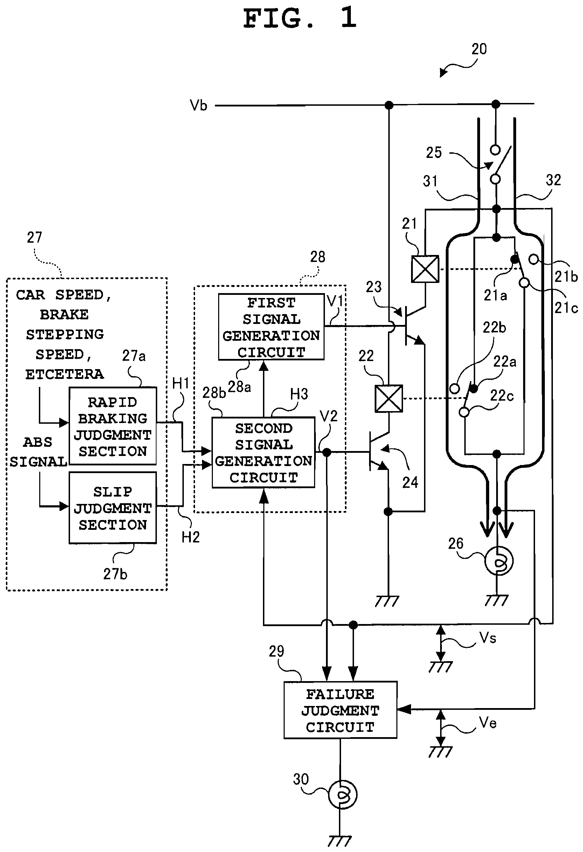

FIG. 1 is a configuration diagram of a stop lamp operation controller according to an embodiment of the present invention. In the diagram, a stop lamp operation controller 20 includes a first relay 21, a second relay 22, a first transistor switch 23, a second transistor switch 24, a brake switch 25, a stop lamp 26, a braking condition judgment circuit 27, a lighting control circuit 28, a failure judgment circuit 29, and a failure indication lamp 30.

One end of the first relay 21 is connected to a battery voltage Vb via the brake switch 25, and one end of the second relay 22 is directly connected to the battery voltage Vb. The other end of the first relay 21 and the second relay 22 are connected to the collector of the first transistor switch 23 and the second transistor switch 24, respectively. Also, each emitter of the first transistor switch 23 and the second transistor switch 24 are connected to ground. Further, a first lighting control signal V1 from the lighting control circuit 28 is inputted into the base of the first transistor switch 23, and a second lighting control signal V2 from the lighting control circuit 28 is inputted into the base of the second transistor switch 24.

The first transistor switch 23 and the second transistor switch 24 operate as a "three-terminal type switching element" that allows or disallows conduction between switching terminals (collector and emitter) corresponding to the electric potential of the control terminal (base).

Based on the concept of the invention, the first transistor switch 23 and the second transistor switch 24 can be of any type as long as the component can actualize the above-described operation (three-terminal type switching clement). Namely, the first transistor switch 23 and the second transistor switch 24 are not limited to the bipolar type transistor shown in FIG. 1, and may be, for example, a Field-Effect Transistor (FET) switch or a mechanical switch, such as a relay, etc. What is necessary to consider is power consumption, cost, durability, response performance, etc when selecting a suitable component.

The first relay 21 and the second relay 22 each other have a normally closed terminal 21a and 22a, a normally open terminal 21b and 22b and a common terminal 21c and 22c. In a non-excited state, the normally closed terminal 21a and 22a are connected between the common terminal 21c and 22c, respectively. In an excited state, the normally open terminal 21b and 22b are connected between the common terminal 21c and 22c, respectively.

Each of the normally closed terminal 21a and 22a of the first relay 21 and the second relay are connected to the battery voltage Vb via the brake switch 25. Each common terminal 21c and 22c of the first relay 21 and second relay 22 are connected to ground via the stop lamp 26. Also, each normally open terminal 21b and 22b of the first relay 21 and the second relay 22 are not connected anywhere.

To simplify the following explanation, two conductive paths ("primary line 31" and "secondary line 32") are defined. The primary line 31 is a conductive path traveling along the brake switch 25 to the normally closed terminal 22a of the second relay 22 to the common terminal 22c of the second relay 22. The secondary line 32 is a conductive path traveling along the brake switch 25 to the normally closed terminal 21a of the first relay 21 to the common terminal 21c of the first relay 21.

Next, an explanation about the configuration of the braking condition judgment circuit 27, the lighting control circuit 28, and the failure judgment circuit 29 will be described.

First, the braking condition judgment circuit 27 comprises a rapid braking judgment section 27a and a slip judgment section 27b. The rapid braking judgment section 27a judges whether or not there is a rapid deceleration condition of a vehicle. This rapid deceleration condition can be judged, for example, from the declining rate of a vehicle's speed, change rate of the brake stepping speed, etc. When a rapid deceleration condition of a vehicle has been judged, the rapid braking judgment section 27a outputs a high-level rapid deceleration condition judgment signal H1. The slip judgment section 27b judges whether or not there is a slip condition of a vehicle (hydroplaning to the drive wheels, etc.) and this slip condition can be judged, for example, by an ABS signal, etc. When a slip condition of a vehicle has been judged, the slip judgment section 27b outputs a high-level slip condition judgment signal H2.

Next, the lighting control circuit 28 comprises a first signal generation circuit 28a and a second signal generation circuit 28b. The first signal generation circuit 28a normally outputs a low-level first lighting control signal V1. However, when a stop lamp flashing signal H3 from the second signal generation circuit 28b is a high-level, a high-level first lighting control signal V1 will be outputted.

The second signal generation circuit 28b normally outputs a low-level second lighting control signal V2. However, when the brake switch 25 turns ON and once a rapid deceleration condition judgment signal H1 or a slip condition judgment signal H2 from the braking condition judgment circuit 27 is a high-level, a high-level stop lamp flashing signal H3 outputs to the first signal generation circuit 28a. The second signal generation circuit 28b also outputs a rectangular wave shaped second lighting control signal V2 that repeats between a high-level and a low-level in a predetermined period. Also, a turned ON judgment can be performed based on the brake switch electric potential Vs drawn out from one end side of the brake switch 25 (lower right side in FIG. 1). When the brake switch 25 is turned ON, the brake switch electric potential Vs is the high potential equivalent to the battery voltage Vb.

The brake switch electric potential Vs, both ends of a voltage Ve of the stop lamp 26 and the second lighting control signal V2 are inputted into the failure judgment circuit 29 and the failure indication lamp 30 is connected thereto. The failure judgment circuit 29 judges whether or not an abnormality (failure) exists either on the primary line 31 or the secondary line 32 based on these input signals (both ends of the voltage Ve of the stop lamp 26 and the second lighting control signal V2 of the brake switch). When judged that an abnormality exists, the failure indication lamp 30 is turned ON. Explanation of the abnormality judgment method will be explained later.

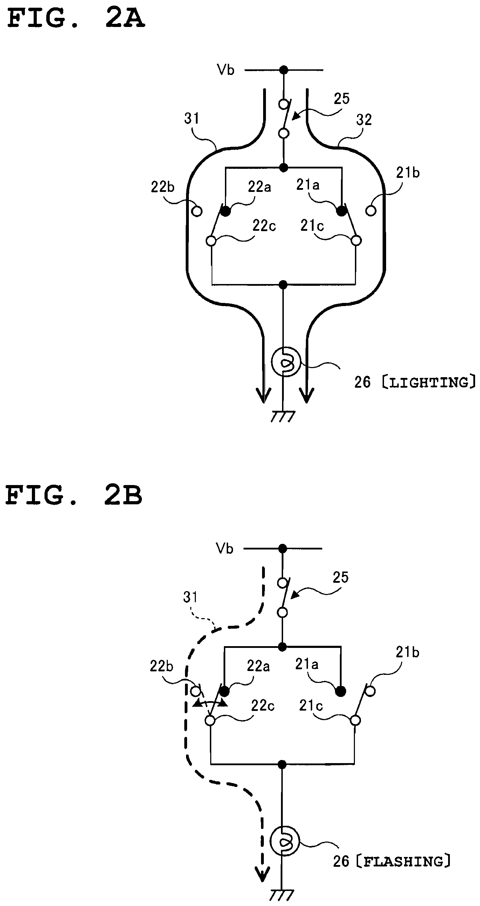

FIG. 2A and FIG. 2B are formed state diagrams of the primary line 31 and the secondary line 32. To begin with, FIG. 2A is a diagram showing a normal condition. As shown in FIG. 2A, when both the first lighting control signal V1 and the second lighting control signal V2 are a low-level, the first relay 21 and the second relay 22 are in a non-excited state and each contact is maintained in a normal condition. Accordingly, the normally closed terminal 21a is connected between the common terminal 21c of the first relay 21, and the normally closed terminal 22a is connected between the common terminal 22c of the second relay 22. Accordingly, since the primary line 31 and the secondary line 32 are always formed in this normal condition, when the brake switch 25 is ON, the battery voltage Vb is supplied to the stop lamp 26 via both the primary line 31 and the secondary line 32, which turns on the stop lamp 26.

On the other hand, as shown in FIG. 2B, when the first lighting control signal V1 is a high-level, the first relay 21 is placed in an excited state. Since the normally open terminal 21b is connected between the common terminal 21c of the first relay 21, the secondary line 32 is interrupted. At this stage, when the second lighting control signal V2 is periodically turned ON and OFF, the second relay 22 will be periodically in an excited state and a non-excited state. Since the normally closed terminal 22a during non-excitation is connected between the common terminal 22c, and whereas the normally open terminal 22b during excitation is connected between the common terminal 22c, the primary line 31 will be periodically connected and disconnected. Consequently in this case, since the battery voltage Vb is supplied to the stop lamp 26 via the primary line 31 which is periodically connected and disconnected, the stop lamp 26 flashes.

In other words, while maintaining a low-level in both the first lighting control signal V1 and the second lighting control signal V2 from the lighting control circuit 28 of FIG. 1, both the first relay 21 and the second relay 22 can be placed in a non-excited state, and both sides of the primary line 31 and the secondary line 32 of FIG. 2A can be formed. In this situation, when a gradual braking condition occurs (namely, when the brake switch 25 is turned ON), the battery voltage Vb can be supplied to the stop lamp 26 through the primary line 31 and the secondary line 32, and the stop lamp 26 can made to turn ON.

Also, while maintaining a high-level in the first lighting control signal V1 and repeating between a high-level and a low-level in the second lighting control signal V2 in a predetermined period, the first relay 21 is placed in an excited state causing the secondary line 32 to be interrupted. Additionally, as formed in FIG. 2B, the second relay 22 is periodically placed in an excited and non-excited state causing the primary line 31 to be periodically connected and disconnected. As explained earlier, repetition of a high-level and low-level of the second lighting control signal V2 occurs whenever there is a high-level rapid deceleration condition judgment signal H1 or a high-level slip state condition judgment signal H2 from the braking condition judgment circuit 27. Ultimately, when rapid braking occurs, the battery voltage Vb is intermittently supplied to the stop lamp 26 through the primary line 31 placed in a connected and disconnected state, resulting in flashing of the stop lamp 26.

Here, durability of the relay in the two above-mentioned states of FIG. 2A and FIG. 2B will be examined. First, in the state of FIG. 2A, both the first relay 21 and the second relay 22 are non-excited and do not perform opening and closing. Thus, the remaining opening and closing number of times until reaching the maximum opening and closing number of times will not decrease. For that reason, it can be said that durability of the relay is hardly affected in the state of FIG. 2A.

Next, in the state of FIG. 2B, since the second relay 22 periodically repeats opening and closing during a rapid braking condition, in this case the remaining opening and closing number of times until reaching the maximum opening and closing number of times will decrease in the interim period. For that reason, it can be said that durability of the relay is affected in the state of FIG. 2B. However, the occurrence of a rapid braking condition as compared with a gradual braking condition is far less frequent. Unless considerably excessive driving is performed, a rapid braking condition may occur once in several months or a year. Therefore, even if periodically connecting and disconnecting of the primary line 31 of FIG. 2B influences durability of the second relay 22, the effect level is negligible and can be disregarded.

For example, suppose that a rapid braking condition is more generally estimated as occurring 100 times in a month (1,200 times in a year) . First, presuming that the maximum number of times the second relay 22 can open and close is 1 million times, the number of times the second relay 22 opens and closes during rapid braking is 5 times per second, and a single rapid braking time is 5 seconds. The number of times the second relay 22 opens and closes per rapid braking is 25 times (5 seconds multiplied by 5 times) and 30 thousand times (1,200 times multiplied by 25 times) annually. According to this calculation, 1 million times divided by 30 thousand is almost equal to 33 (years). Thus, the second relay 22 life span may be exhausted in about 33 years. A life span of 33 years can be considered more than sufficient for a relay used in a vehicle.

However, rarely is a relay life span exhausted for not having been replaced due to vehicle operation. Alternatively, a relay failure may occur regardless of the relay life span. Therefore, in such cases, there is a necessity to have a safety measure in place at the time of a relay failure. Hereinafter, an explanation of this safety measure for "failure judgment processing" will be described.

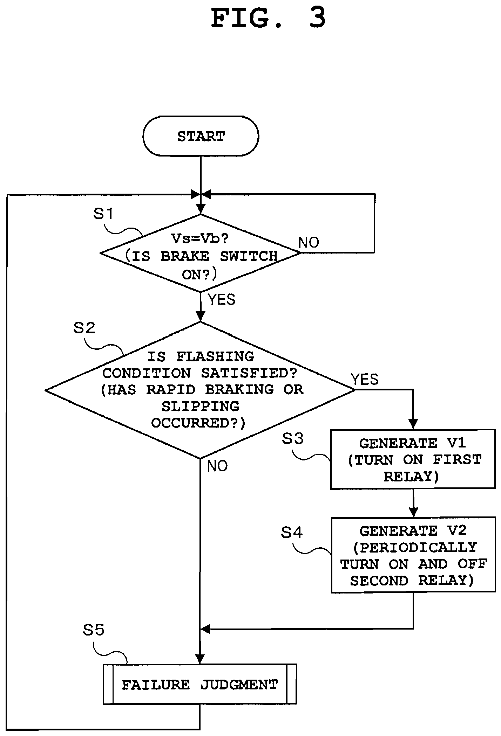

FIG. 3 is a diagram showing an operation flowchart of the stop lamp operation controller according to an embodiment of the present invention. First in this flowchart, the process judges whether or not the brake switch 25 is turned ON, in other words, whether Vs equals Vb (Step S1). When the brake switch 25 is not turned ON, this judgment Step S1 is repeated. When the brake switch 25 is turned ON, the process judges existence of a flashing condition for flashing the stop lamp 26 (Step S2) . Flashing conditions indicate whether or not one a situation of a rapid braking condition has been judged (a high-level rapid deceleration condition judgment signal H1 has been outputted) or a slip condition has been judged (a high-level slip condition judgment signal H2 has been outputted) by the braking condition judgment section 27.

When a flashing condition has not been satisfied, namely, in the case of a gradual braking condition, the process advances to failure judgment processing (Step S5). On the other hand, when a flashing condition has been satisfied, a high-level first lighting control signal V1 outputs from the lighting control circuit 28 to place the first relay 21 in an excited state (Step S3). In addition, a rectangular wave shaped second light control signal V2 is outputted which repeats between a high-level and a low-level in a predetermined period from the lighting control circuit 28 (Step S4) in order to flash the stop lamp 26 by periodically turning ON and OFF (opening and closing) the second relay 22, and the process advances to failure judgment processing (Step S5).

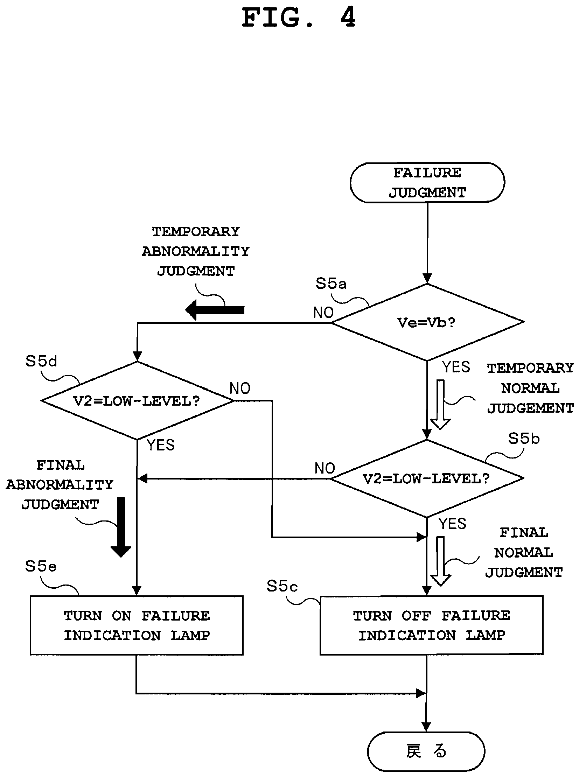

FIG. 4 is a subroutine flowchart of the failure judgment processing (Step S5). In failure judgment processing, first, the process judges whether or not Ve equals Vb, in other words, the process judges whether or not the battery voltage Vb is being supplied to the stop lamp 26 (Step S5a). Since already judged at Step S1 in FIG. 3 that Vs equals Vb (in other words, the brake switch 25 is turned ON), here Ve is equal to Vb at Step S5a.

In cases where Ve does not equal Vb, an abnormality may have occurred on the primary line 31 or the secondary line 32 (for example, although there is a slim possibility, defective continuity associated with contact wear on either of the normally closed terminal 21a and 22a of the first relay 21 and the second relay 22). However, at this stage, the abnormality is only a "possibility". This is because, when flashing control of the stop lamp 26 is being performed, since the second relay 22 is periodically being turned ON and OFF, the supply of the battery voltage Vb to the stop lamp 26 is momentarily interrupted during this ON period (V2 = high-level period).

When not a case of "Ve equals Vb" at Step S5a, the process judges a "temporary abnormality judgment". Next, the process judges whether or not the second lighting control signal V2 is a high-level (Step S5d). When the judgment result is YES, namely, although being in an OFF period of the second relay 22 (V2 = low-level period) and not a case of Ve equals Vb, the process makes a final judgment (final abnormality judgment) that an abnormality has occurred on the primary line 31. After turning ON the failure indication lamp 30 (Step S5e), the process exits the flow and returns to Step S1 in FIG. 3. However, when the second lighting control signal V2 is not a low-level, naturally Ve does not equal Vb, and there is no abnormality on the primary line 31. In this case, the process makes a final judgment (final normal judgment) that the primary line 31 is normal. After turning OFF the failure indication lamp 30 (Step S5c), the process exits the flow and returns to Step S1 in FIG. 3.

On the other hand, when judged that Ve equals Vb at Step S5a, the primary line 31 and the secondary line 32 are normal. However, this is provided that there is a "normal possibility" like the above situation. When the flashing control of the stop lamp 26 is being carried out, Ve equals Vb in an OFF period of the relay 22 (V2 = low-level period), but is not correct if Ve equals Vb in an ON period of the relay 22 (V2 = high-level period) . Therefore, this case of being judged "Ve equals Vb" at Step S5a is a "temporary abnormality judgment". Next, the process judges whether or not the second lighting control signal V2 is a low-level (whether or not an OFF period of the second relay 22) (Step S5b). When the judgment result is YES, namely, Ve equals Vb in an OFF period of the second relay 22, the process makes a final judgment (final normal judgment) that the primary line 31 is normal. After turning OFF the failure indication lamp 30 (Step S5c), the process exits the flow and returns to Step S1 in FIG. 3. However, when the judgment result at Step S5b is NO, namely, if Ve equals Vb in an ON period of the second relay 22, an abnormality will occur in the primary line 31 and a final judgment (final abnormality judgment) will result. After turning ON the failure indication lamp 30 (Step S5e), the process exits the flow and returns to Step S1 in FIG. 3.

Accordingly, when the brake switch is turned ON in the failure judgment processing of FIG. 4, if either Ve equals Vb and V2 is a low-level or Ve is not equal to Vb and V2 is a high-level, the process makes a "final normal judgment" of the primary line 31 and the failure indication lamp 30 is turned OFF. On the other hand, if either Ve equals Vb and V2 is not a low-level or Ve is not equal to Vb and V2 is a high-level, the process makes a "final abnormality judgment" of the primary line 31 and the failure indication lamp 30 is turned ON.

According to this embodiment, the following effects can be achieved with the above-mention configuration. First, during gradual braking since the first relay 21 and the second relay 22 remain in a non-exited state, durability of the relays does not deteriorate. On the other hand, during rapid braking because the second relay 22 opens and closes in a predetermined period (V2 period), durability degradation is a concern due to these openings and closings of the second relay 22. However, as rapid braking occurs very infrequently, this does not significantly impair durability. For example, in the above-mentioned example calculation, the life span of the second relay 22 is about 33 years. Durability of about 12 times the life span (2.7 years) of the earlier described conventional prior art can be achieved.

Next, in this embodiment, the braking conditions are divided into gradual braking and rapid braking. As gradual braking causes the stop lamp 26 to turn ON and rapid braking causes the stop lamp 26 to flash (ON and OFF), the stop lamp 26 can be flashed only in an emergency or unavoidable circumstance. Also, an exceptional brake lamp indication can be effected with regard to a following vehicle, etc.

Next, in this embodiment, both sides of the primary line 31 and the secondary line 32 are used during gradual braking, which turns ON the stop lamp 26. Since the stop lamp 26 can be turned ON by each other of lines even if a fault occurs temporarily in one of these lines, the configuration of the present invention has an excellent fail-safe feature.

Naturally, the present invention is not limited to the configuration of the above-described embodiment and various examples of evolution or modifications can be envisioned within the scope of the appended claims. For example, the following configuration is achievable.

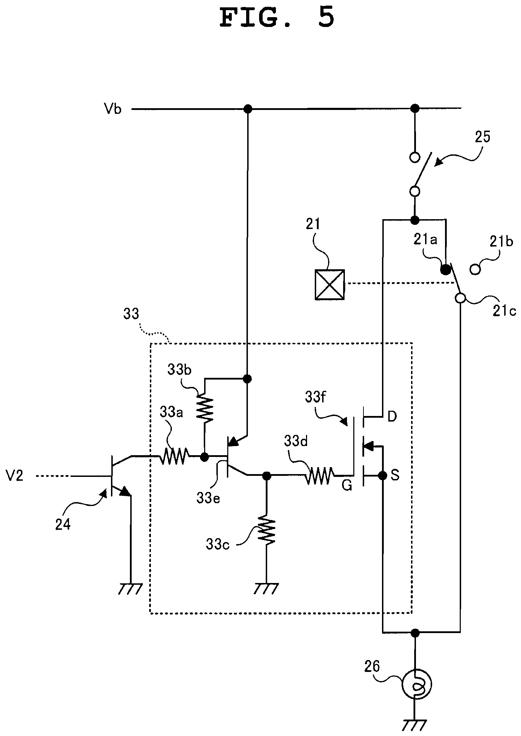

FIG. 5 is a configuration diagram of a semiconductor switching circuit 33 which can be used in place of a second relay 22. In FIG. 5, the semiconductor switch circuit 33 comprises a configuration of resistors 33a to 33d, a bipolar transistor switch 33e and an FET switch 33f.

The emitter of the bipolar transistor switch 33e is connected to the battery voltage Vb. The base of the bipolar transistor switch 33e is connected to the collector of a second transistor switch 24 via the resistor 33a and connected to the battery voltage Vb via the resistor 33b. Additionally, the collector of the bipolar transistor switch 33e is connected to ground via the resistor 33c and connected to the gate (G) of the FET switch 33f via the resistor 33d. The drain (D) of the FET switch 33f is connected to one end of the brake switch 25 and the normally closed terminal 21a of the first relay 21. Further, the source (S) of the FET switch 33f is connected to ground via the stop lamp 26.

In the semiconductor switch circuit 33 having such a configuration as described above, the FET switch 33f switches to an ON state (switches ON between S-D) during a gradual braking. The FET switch 33f is periodically switched ON and switched OFF according to repetitions of the high-level and the low-level of the second lighting control signal V2 during a rapid braking.

Accordingly, the same operation effects as the second relay 22 of the above-described embodiment can be achieved. In addition, since the FET switch 33f does not have a mechanical contact such as the second relay 22, durability can be appreciably improved and the life span further extended as compared to the second relay 22. Also, since there is no mechanical contact, electrical noise does not occur easily and there is no adverse effect on other electrical components, etc. Furthermore, a characteristic effect of improving the life span of the stop lamp 26 can be acquired.

## Claims

1. A stop lamp operation controller (20) for supplying a battery voltage (Vb) to a stop lamp (26) via a brake detection switching element (25) which is turned ON during a braking operation of a vehicle, wherein the stop lamp operation controller (20) comprises:
a primary line (31) and a secondary line (32) aligned in parallel between the brake detection switching element (25) and the stop lamp (26);
a first relay (21) for placing the secondary line (32) in a non-conductive state during an excited state and alternatively placing the secondary line (32) in a conductive state during a non-exited state;
a second relay (22) for placing the primary line (31) in a non-conductive state during an excited state and alternatively placing the primary line (31) in a conductive state during a non-excited state;
a rapid braking condition judgment means (27) for judging a rapid braking condition; **characterized in that**
when both the first relay (21) and the second relay (22) are in the non-excited state the battery voltage (Vb) can be supplied to the stop lamp (26) through the primary line (31) and the secondary line (32) during a braking operation of the vehicle, and **in that**
a control means (28) places the first relay (21) in the excited state and periodically placing the second relay (22) in the non-excited state and the excited state, when a rapid braking condition is judged by the rapid braking condition judgment means (27), and alternatively places both the first relay (21) and the second relay (22) in the non-excited state, when a rapid braking condition is not judged by the rapid braking condition means (27).

2. The stop lamp operation controller according to claim 1, further **characterized by**:
an abnormality judgment means (29) for judging abnormality of the primary line (31) or the secondary line (32); and
an information means (30) for reporting an abnormality, when an abnormality of the primary line (31) or secondary line (32) is judged by the abnormality judgment means (29).

3. A stop lamp operation controller (20) for supplying a battery voltage (Vb) to a stop lamp (26) via a brake detection switching element (25) which is turned ON during a braking operation of a vehicle, wherein the stop lamp operation controller (20) comprises:
a primary line (31) and a secondary line (32) aligned in parallel between the brake detection switching element (25) and the stop lamp (26);
a relay (21) for placing the secondary line (32) in a non-conductive state during an excited state and alternatively placing the secondary line (32) in a conductive state during a non-exited state;
a switching circuit (33) for placing the primary line (31) in a non-conductive state during an OFF state and alternatively placing the primary line (31) in a conductive state during an ON state;
a rapid braking condition judgment means (27) for judging a rapid braking condition; **characterized in that**
when the relay (21) is in the non-excited state and the switching circuit (33) is in the ON state the battery voltage (Vb) can be supplied to the stop lamp (26) through the primary line (31) and the secondary line (32) during a braking operation of the vehicle, and **in that**
a control means (28) places the relay (21) in the excited state and periodically placing the switching circuit (33) in the OFF state and the ON state, when a rapid braking condition is judged by the rapid braking condition judgment means (27), and alternatively places the relay (21) in the non-excited state and the switching circuit (33) in the ON state, when a rapid braking condition is not judged by the rapid braking condition means (27).

4. The stop lamp operation controller according to claim 3, further **characterized by**:
an abnormality judgment means (29) for judging abnormality of the primary line (31) or the secondary line (32); and
an information means (30) for reporting an abnormality, when an abnormality of the primary line (31) or secondary line (32) is judged by the abnormality judgment means (29).

## Patentansprüche

1. Bremsleuchtenbetriebssteuerung (20) zum Zuführen einer Batteriespannung (Vb) zu einer Bremsleuchte (26) über ein Bremserfassungsschaltelement (25), das während eines Bremsvorgangs eines Fahrzeugs EIN-geschaltet wird, wobei die Bremsleuchtenbetriebssteuerung (20) umfasst:
eine Primärleitung (31) und eine Sekundärleitung (32), die parallel zwischen dem Bremserfassungsschaltelement (25) und der Bremsleuchte (26) angeordnet ist;
ein erstes Relais (21) zum Versetzen der Sekundärleitung (32) in einen nichtleitenden Zustand während eines erregten Zustands und alternativ Versetzen der Sekundärleitung (32) in einen leitenden Zustand während eines nicht-erregten Zustands;
ein zweites Relais (22) zum Versetzen der Primärleitung (31) in einen nichtleitenden Zustand während eines erregten Zustands und alternativ Versetzen der Primärleitung (31) in einen leitenden Zustand während eines nicht-erregten Zustands;
ein Schnellbremsungsbeurteilungsmittel (27) zum Beurteilen eines Schnellbremsungszustands; **dadurch gekennzeichnet, dass**
wenn sich sowohl das erste Relais (21) als auch das zweite Relais (22) in dem nicht-erregten Zustand befinden, Spannung (Vb) der Bremsleuchte (26) durch die Primärleitung (31) und die Sekundärleitung (32) während eines Bremsvorgangs eines Fahrzeugs zugeführt werden kann, und dadurch, dass
ein Steuermittel (28) das erste Relais (21) in den erregten Zustand versetzt und periodisch das zweite Relais (22) in den nicht-erregten Zustand und den erregten Zustand versetzt, wenn ein Schnellbremsungszustand von dem Schnellbremsungsbeurteilungsmittel (27) beurteilt wird, und alternativ sowohl das erste Relais (21) als auch das zweite Relais (22) in den nicht-erregten Zustand versetzt, wenn ein Schnellbremsungszustand von dem Schnellbremsungsbeurteilungsmittel (27) nicht beurteilt wird.

2. Bremsieuchtenbetriebssteuerung nach Anspruch 1, weiter **gekennzeichnet durch**:
ein Abnormalitätbeurteilungsmittel (29) zum Beurteilen von einer Abnormalität der Primärleitung (31) oder der Sekundärleitung (32); und
ein Informationsmittel (30) zum Berichten einer Abnormalität, wenn eine Abnormalität der Primärleitung (31) oder der Sekundärleitung (32) von dem Abnormalitätsbeurteilungsmittel (29) beurteilt wird.

3. Bremsleuchtenbetriebssteuerung (20) zum Zuführen einer Batteriespannung (Vb) zu einer Bremsleuchte (26) über ein Bremserfassungsschaltelement (25), das während eines Bremsvorgangs eines Fahrzeugs EIN-geschaltet wird, wobei die Bremsleuchtenbetriebssteuerung (20) umfasst:
eine Primärleitung (31) und eine Sekundärleitung (32), die parallel zwischen dem Bremserfassungsschaltelement (25) und der Bremsleuchte (26) angeordnet ist;
ein Relais (21) zum Versetzen der Sekundärleitung (32) in einen nichtleitenden Zustand während eines erregten Zustands und alternativ Versetzen der Sekundärleitung (32) in einen leitenden Zustand während eines nicht-erregten Zustands;
einen Schaltkreis (33) zum Versetzen der Primärleitung (31) in einen nichtleitenden Zustand während eines AUS-Zustands und alternativ Versetzen der Primärleitung (31) in einen leitenden Zustand während eines EIN-Zustands;
ein Schnellbremsungsbeurteilungsmittel (27) zum Beurteilen eines Schnellbremsungszustands; **dadurch gekennzeichnet, dass**
wenn sich das Relais (21) in dem nicht-erregten Zustand befindet und sich der Schaltkreis (33) in dem EIN-Zustand befindet, die BatterieSpannung (Vb) der Bremsleuchte (26) durch die Primärleitung (31) und die Sekundärleitung (32) während eines Bremsvorgangs eines Fahrzeugs zugeführt werden kann, und dadurch, dass
ein Steuermittel (28) das Relais (21) in den erregten Zustand versetzt und periodisch den Schaltkreis (33) in den AUS-Zustand und den EIN-Zustand versetzt, wenn ein Schnellbremsungszustand von dem Schnellbremsungsbeurteilungsmittel (27) beurteilt wird, und alternativ das Relais (21) in den nicht-erregten Zustand und den Schaltkreis (33) in den EIN-Zustand versetzt, wenn ein Schnellbremsungszustand von dem Schnellbremsungsbeurteilungsmittel (27) nicht beurteilt wird.

4. Bremsleuchtenbetriebssteuerung nach Anspruch 3, weiter **gekennzeichnet durch**:
ein Abnormalitätsbeurteilungsmittel (29) zum Beurteilen von Abnormalität der Primärleitung (31) oder der Sekundärleitung (32); und
ein Informationsmittel (30) zum Berichten einer Abnormalität, wenn eine Abnormalität der Primärleitung (31) oder der Sekundärleitung (32) von dem Abnormalitätsbeurteilungsmittel (29) beurteilt wird.

## Revendications

1. Dispositif de commande de fonctionnement de feu de frein (20) destiné à alimenter un feu de frein (26) en tension de batterie (Vb) par le biais d'un élément de commutation de détection de frein (25) qui est en marche pendant une opération de freinage d'un véhicule, dans lequel le dispositif de commande de fonctionnement de feu de frein (20) comprend :
une ligne primaire (31) et une ligne secondaire (32) alignées en parallèle entre l'élément de commutation de détection de frein (25) et le feu de frein (26) ;
un premier relais (21) destiné à placer la ligne secondaire (32) dans un état non conducteur pendant un état excité et à placer alternativement la ligne secondaire (32) dans un état conducteur pendant un état non excité ;
un deuxième relais (22) destiné à placer la ligne primaire (31) dans un état non conducteur pendant un état excité et à placer alternativement la ligne primaire (31) dans un état conducteur pendant un état non excité , un moyen de jugement de condition de freinage rapide (27) destiné à juger une condition de freinage rapide ; **caractérisé en ce que**
lorsque le premier relais (21) et le deuxième relais (22) se trouvent tous les deux dans l'état non excité, la tension de batterie (Vb) peut alimenter le feu de frein (26) par l'intermédiaire de la ligne primaire (31) et de la ligne secondaire (32) pendant une opération de freinage du véhicule, et **en ce que**
un moyen de commande (28) place le premier relais (21) dans l'état excité et place périodiquement le deuxième relais (22) dans l'état non excité et l'état excité, lorsqu'une condition de freinage rapide est jugée par le moyen de jugement de condition de freinage rapide (27), et place alternativement à la fois le premier relais (21) et le deuxième relais (22) dans l'état non excité, lorsqu'une condition de freinage rapide n'est pas jugée par le moyen de condition de freinage (27).

2. Dispositif de commande de fonctionnement de feu de frein selon la revendication 1, **caractérisé en outre par** :
un moyen de jugement d'anomalie (29) destiné à juger une anomalie de la ligne primaire (31) ou de la ligne secondaire (32) ; et
un moyen d'information (30) destiné à signaler une anomalie, lorsqu'une anomalie de la ligne primaire (31) ou de la ligne secondaire (32) est jugée par le moyen de jugement d'anomalie (29).

3. Dispositif de commande de fonctionnement de feu de frein (20) destiné à alimenter un feu de frein (26) en tension de batterie (Vb) par le biais d'un élément de commutation de détection de frein (25) qui est en marche pendant une opération de freinage d'un véhicule, dans lequel le dispositif de commande de fonctionnement de feu de frein (20) comprend :
une ligne primaire (31) et une ligne secondaire (32) alignées en parallèle entre l'élément de commutation de détection de frein (25) et le feu de frein (26) ;
un relais (21) destiné à placer la ligne secondaire (32) dans un état non conducteur pendant un état excité et à placer alternativement la ligne secondaire (32) dans un état conducteur pendant un état non excité ;
un circuit de commutation (33) destiné à placer la ligne primaire (31) dans un état non conducteur pendant un état d'arrêt et à placer alternativement la ligne primaire (31) dans un état conducteur pendant un état de marche ;
un moyen de jugement de condition de freinage rapide (27) destiné à juger une condition de freinage rapide ; **caractérisé en ce que**
lorsque le relais (21) se trouve dans l'état non excité et que le circuit de commutation (33) se trouve dans l'état de marche, la tension de batterie (Vb) peut alimenter le feu de frein (26) par l'intermédiaire de la ligne primaire (31) et de la ligne secondaire (32) pendant une opération de freinage du véhicule, et **en ce que**
un moyen de commande (28) place le relais (21) dans l'état excité et place périodiquement le circuit de commutation (33) dans l'état d'arrêt et dans l'état de marche, lorsqu'une condition de freinage rapide est jugée par le moyen de jugement de condition de freinage rapide (27), et place alternativement le relais (21) dans l'état non excité et le circuit de commutation (33) dans l'état de marche, lorsqu'une condition de freinage rapide n'est pas jugée par le moyen de condition de freinage rapide (27).

4. Dispositif de commande de fonctionnement de feu de frein selon la revendication 3, **caractérisé en outre par** :
un moyen de jugement d'anomalie (29) destiné à juger une anomalie de la ligne primaire (31) ou de à ligne secondaire (32) ; et
un moyen d'information (30) destiné à signaler une anomalie, lorsqu'une anomalie de la ligne primaire (31) ou de la ligne secondaire (32) est jugée par le moyen de jugement d'anomalie (29).
